# EUROPÄISCHE PATENTSCHRIFT

(11) **EP 3 847 124 B1**
(45) Veröffentlichungstag und Bekanntmachung des Hinweises auf die Patenterteilung: **11.09.2024**
(21) Anmeldenummer: 19750085.3
(22) Anmeldetag: 29.07.2019
(51) Int. Cl.: G08C 17/02, G08C 23/04, B66F 3/46, B66F 9/24, G05B 19/042

(54) **HUBSYSTEM UND VERFAHREN ZUR STEUERUNG DES HUBSYSTEMS SOWIE STEUERUNGSSYSTEM FÜR DAS HUBSYSTEM**
LIFTING SYSTEM AND METHOD FOR CONTROLLING THE LIFTING SYSTEM AND CONTROL SYSTEM FOR THE LIFTING SYSTEM
SYSTÈME DE LEVAGE ET PROCÉDÉ SERVANT À COMMANDER LE SYSTÈME DE LEVAGE, AINSI QUE SYSTÈME DE COMMANDE POUR LE SYSTÈME DE LEVAGE

(30) Priorität: 03.09.2018 DE 102018121431; 18.12.2018 DE 102018132735; 29.01.2019 DE 102019102138
(43) Veröffentlichungstag der Anmeldung: 14.07.2021
(73) Patentinhaber: Finkbeiner, Gerhard, 72250 Freudenstadt (DE)
(72) Erfinder: FEMBÖCK, Josef, 84524 Neuötting (DE)
(74) Vertreter: Mammel und Maser Patentanwälte PartG mbB
(86) Internationale Anmeldenummer: PCT/EP2019/070356
(87) Internationale Veröffentlichungsnummer: WO 2020/048682

(56) Entgegenhaltungen:
- EP-A1- 1 672 385
- WO-A2-2008/116595
- DE-A1- 102016 218 756
- GB-A- 2 350 919
- US-A1- 2016 272 471

## Beschreibung

Die Erfindung betrifft ein Hubsystem, insbesondere zum Heben und Senken von Fahrzeugen, welches mehrere Hubvorrichtungen umfasst, die mit einem Steuersystem ansteuerbar sind. Die Erfindung betrifft des Weiteren ein Verfahren zur Steuerung eines solchen Hubsystems als auch eine Systemsteuerung für ein solches Hubsystem.

Aus der DE 11 2015 001 913 T5 ist ein Hubsystem zum Heben und Senken eines Fahrzeuges sowie ein Verfahren zur Steuerung des Hubsystems bekannt. Dieses Hubsystem umfasst mehrere Hubvorrichtungen, welche als mobile Hubvorrichtungen ausgebildet sind. Jedes dieser Hubvorrichtungen umfasst ein auf und ab bewegbares Lastaufnahmemittel sowie eine Steuereinheit. Die Steuereinheiten der jeweiligen Hubvorrichtungen werden von einer zentralen Steuerungseinrichtung des Steuerungssystems angesteuert. Diese zentrale Steuerungseinrichtung kann ortsfest oder auf einem Wagen vorgesehen sein. Die zentrale Steuerungseinrichtung weist einen Sender/Empfänger zur Kommunikation mit der individuellen Hubvorrichtung sowie eine Berechnungseinrichtung und einen Prozessor zum Bestimmen erforderlicher Steuervorgänge. Die zentrale Steuerungseinrichtung kommuniziert mit den Hubvorrichtungen drahtlos.

Aus der US 2016/0272471 A1 ist ein Hubsystem zum Heben und Senken von Fahrzeugen gemäß dem Oberbegriff des Anspruchs 1 bekannt. Dieses Hubsystem umfasst mehrere Hubvorrichtungen, die mit einem Steuerungssystem ansteuerbar sind. An jeder Hubvorrichtung ist eine Steuereinheit vorgesehen. Diese Steuereinheit kommuniziert mit einem tragbaren Handgerät sowie mit einer Rechnereinheit. Dabei ist eine drahtlose Datenübertragung durch WiFi oder Bluetooth vorgesehen.

Aus der DE 199 25 721 A1 geht ein Verfahren und eine Einrichtung zur ferngesteuerten Betätigung eines Steuergerätes für Ausbaugestelle im untertägigen Bergbau hervor. Eine Fernbedienung umfasst einen Infrarotsender und -empfänger, der zur Auswahl eines der Steuergeräte mit der Fernbedienung kommuniziert. Nachdem ein Steuergerät ausgewählt wurde, werden durch das Steuergerät per Funk Daten übertragen, wobei die Datenübertragung auf einem getrennten und abweichenden Weg als Infrarotdatenübertragung zu einem Funk-Transceiver erfolgt, durch welchen kabelgebunden nur das ausgewählte Steuergerät angesteuert wird.

Die Sicherheitsanforderungen an Hubsysteme sowie an ein Verfahren zur Steuerung von solchen Hubsystemen steigen stetig an. Insbesondere ist sicherzustellen, dass sich während des Hebens und Senkens einer Last durch das Hubsystem ein Bediener außerhalb eines Arbeitsraumes befindet, der durch die Anzahl der einander zugeordneten Hubvorrichtungen gebildet ist. Insbesondere darf sich der Benutzer nicht unterhalb der Hubvorrichtungen oder in der Nähe von sich bewegenden Teilen der Hubvorrichtungen oder unterhalb der zu hebenden Last befinden.

Der Erfindung liegt deshalb die Aufgabe zugrunde, ein Hubsystem sowie ein Verfahren zur Steuerung eines Hubsystems vorzuschlagen, wodurch eine erhöhte Sicherheit bei der Ansteuerung des Hebesystems gegeben ist.

Diese Erfindung wird durch ein Hubsystem gelöst, bei welchem an jeder Hubvorrichtung des Hubsystems eine Steuereinheit vorgesehen ist sowie getrennt dazu eine Steuerungseinrichtung vorgesehen ist, wobei die jeweilige Steuereinheit und die Steuerungseinrichtung jeweils einen Sender/Empfänger umfassen, um Steuersignale zu übertragen und zusätzlich an jeder der Steuerungseinheiten und an der Steuerungseinrichtung jeweils eine Datenschnittstelle für eine drahtlose Übertragung eines Anwesenheitssignals vorgesehen ist und die Datenschnittstelle der Steuereinheit einen Signalkegel aufweist, der abweichend zum Lastaufnahmemittel der Hubvorrichtung ausgebildet ist. Dadurch wird ermöglicht, dass der Bediener mit der Steuerungseinrichtung sich in einem ausreichenden Sicherheitsabstand zur Hubvorrichtung aufhalten kann, um das Hubsystem anzusteuern. Durch die Ausrichtung des Signalkegels abweichend zum Lastaufnahmemittel ist gewährleistet, dass der Benutzer sich außerhalb des Gefahrenbereiches der Hubvorrichtung aufhalten muss, da ansonsten ein Austausch des Anwesenheitssignals und des Steuersignals nicht möglich ist. Das Vorhandensein beider Signale ist erforderlich, um das Hubsystem anzusteuern. Darüber hinaus weist diese Anordnung den Vorteil auf, dass der Bediener das Hubsystem nicht direkt an der Hubvorrichtung bedienen muss, so dass sich dieser in einem ausreichenden Sicherheitsabstand zum Hubsystem aufhalten kann.

Zur weiteren Erhöhung der Betriebssicherheit ist vorgesehen, dass bei einem Empfang des Anwesenheitssignals und des Steuersignals von der Steuerungseinrichtung in einem vorbestimmten Zeitfenster die Ansteuerung der Vorrichtungen durch die Steuereinheit freigegeben wird. Sofern das Anwesenheitssignal und das Steuersignal zeitlich versetzt außerhalb eines vorbestimmten Zeitfensters erfasst werden, kann ein Heben und Senken des Hebesystems nicht gestartet werden. Dadurch kann sichergestellt werden, dass der Bediener sich auch tatsächlich außerhalb des Gefahrenbereichs aufhält und beispielsweise ein dauerndes Anwesenheitssignal simuliert wird, um von einem beliebigen Ort ein Steuersignal auszusenden.

Des Weiteren ist bevorzugt vorgesehen, dass zwischen zwei einander gegenüberliegenden oder mehreren paarweise einander gegenüberliegenden Hubvorrichtungen ein Arbeitsraum gebildet ist und der Signalkegel der Datenschnittstelle an der Steuerungseinheit außerhalb dieses Arbeitsraumes liegt. Dadurch muss der Bediener sich zwangsweise außerhalb des Arbeitsraumes befinden, um die Steuerungseinrichtung innerhalb des Signalkegels der Datenschnittstelle zu positionieren, damit darauffolgend das Anwesenheitssignal und Steuersignal in dem bevorzugten Zeitfenster von der Steuereinheit erfassbar sind.

Der Signalkegel der Datenschnittstelle ist bevorzugt entgegengesetzt zum Lastaufnahmemittel der Hubvorrichtung ausgerichtet. Dadurch kann der notwendige Sicherheitsabstand geschaffen werden.

Des Weiteren ist bevorzugt vorgesehen, dass der Signalkegel der Datenschnittstelle an der Steuereinheit horizontal ausgerichtet ist oder gegenüber einer Horizontalen nach unten geneigt ist. Dies ermöglicht die Verringerung von Störeinflüssen, insbesondere bei Reflexionen von Signalen, die das Anwesenheitssignal simulieren könnten.

Des Weiteren ist vorgesehen, dass der Signalkegel der Datenschnittstelle und der Signalkegel des Senders/Empfängers für das Steuersignal gleich ausgerichtet sind. Dadurch kann die Position des Bedieners zur Hubvorrichtung für eine Ansteuerung des Hubsystems mit einem ausreichenden Sicherheitsabstand noch exakter definiert werden.

Des Weiteren ist bevorzugt vorgesehen, dass die Datenschnittstelle für das Anwesenheitssignal durch einen IR-Empfänger und einen IR-Sender gebildet ist und das Steuersignal mit einem davon abweichenden Sender und Empfänger übertragbar ist. Dadurch kann eine einfache und getrennte Auswertung des Anwesenheits- und Steuersignals ermöglicht sein. Zudem können die bisherigen Kommunikationskomponenten für die drahtlose Kommunikation von Steuersignalen, wie beispielsweise Funk oder WLAN, beibehalten werden.

Des Weiteren ist bevorzugt vorgesehen, dass die Steuereinheit ein Display zur Anzeige von zumindest einem Betriebsstatus aufweist. Bevorzugt können auch weitere Funktionen über dieses Display zur Ansteuerung des Steuerungs- und/oder des Hubsystems vorgesehen sein.

Des Weiteren ist bevorzugt vorgesehen, dass die Steuerungseinrichtung zumindest ein Display, ein Tastenfeld und/oder eine Ladeschnittstelle für Akkumulatoren und/oder austauschbare Akkumulatoren umfasst. Dadurch ist die Steuerungseinrichtung mobil ausgebildet. Bevorzugt kann vorgesehen sein, dass die Steuerungseinrichtung ein austauschbares, insbesondere steckbares, Display auch in Form eines Smartphones, Tablets oder dergleichen aufweist.

Die Ansteuerung des Lastaufnahmemittels durch die Steuereinheit wird bevorzugt erst dann freigegeben, sofern die Steuerungseinrichtung innerhalb des Signalkegels der Datenschnittstelle ist und mit dieser kommuniziert und ein zeitgleicher Empfang des Anwesenheitssignals über die Datenschnittstelle und des Steuersignals über den getrennt dazu angeordneten Sender/Empfänger gegeben ist. Dadurch kann die Betriebssicherheit noch weiter erhöht werden.

Vorteilhafterweise sind die Steuerungseinrichtung als Master und die Steuereinheiten als Slave ausgebildet. Dadurch wird durch diese Steuerungseinrichtung eine Fernbedienung gebildet, durch welche das Hubsystem ansteuerbar ist. Dabei kann die Steuerungseinrichtung zur Ansteuerung des Hubsystems jeder Steuereinheit zugeordnet sein, um daraufhin das gesamte Hubsystem anzusteuern. Dies ermöglicht des Weiteren, dass die an den Hubvorrichtungen angeordneten Steuereinheiten vereinfacht ausgebildet sein können. Die Kommunikation erfolgt somit jeweils zwischen der Steuereinheit und der Steuerungseinrichtung.

Des Weiteren ist bevorzugt vorgesehen, dass die Steuerungseinrichtung als tragbares Handgerät ausgebildet ist. Dadurch kann der Bediener verschiedene Positionen zum Hubsystem einnehmen und von dort aus den Arbeitsraum einsehen, ob womöglich ein Gefahrenpotenzial beim Betrieb des Hubsystems gegeben sein könnte.

Des Weiteren ist bevorzugt vorgesehen, dass mehrere Steuerungseinrichtungen in das Steuersystem des Hubsystems eingebunden und miteinander gekoppelt sind. Insbesondere bei Hubsystemen, welche sechs, acht, zehn oder mehrere Hubvorrichtungen aufweisen, kann es von Vorteil sein, dass eine Zwei-Mann-Bedienung erfolgt. Für diesen Zweck sind beispielsweise auch Steuerungseinrichtungen miteinander gekoppelt, so dass erst bei gleichzeitiger Positionierung der beiden Steuerungseinrichtungen zu jeweils einer Steuereinheit und der Empfang von jeweils einem Anwesenheitssignal und Steuersignal in einem Zeitfenster das Hubsystem ansteuerbar ist.

Bevorzugt ist vorgesehen, dass die zumindest eine mobile Steuerungseinrichtung mit einer ortsfesten Steuerung im Arbeitsraum des zumindest einen Hubsystems kommuniziert. Diese ortsfeste Steuerung kann als Master ausgebildet sein. Insbesondere kann die Steuerung als Master mit der zumindest einen mobilen Steuerungseinrichtung kommunizieren und/oder nach Aktivierung der zumindest einen Steuereinheit durch die Steuerungseinrichtung auch direkt mit den als Slave betriebenen Steuereinheiten. Durch die Positionierung der zumindest einen mobilen Steuerungseinrichtung zur jeweiligen Hubvorrichtung kann eine gesicherte Aktivierung des Hubsystems erfolgen. Darauffolgend kann eine zentrale Ansteuerung der zumindest einen Hubvorrichtung über die ortsfeste Steuerung ermöglicht sein. Die ortsfeste Steuerung kann alternativ auch als eine Kommunikationsschnittstelle ausgebildet sein. Die ortsfeste Steuerung kann sowohl in der Funktion als Master und als Kommunikationsschnittstelle ausgebildet sein. Diese ortsfeste Steuerung kommuniziert mit der zumindest einen als Master betriebenen mobilen Steuerungseinrichtung. Diese ortsfeste Steuerung kann alle Daten des Hubsystems speichern und verwalten. Auch kann die ortsfeste Steuerung eine Schnittstelle für einen externen Zugang aufweisen, z.B. für eine Fernwartung oder Update einer Softwareaktualisierung.

Die zumindest eine mobile Steuerungseinrichtung kann als Master betrieben werden und kann Daten und/oder Informationen und/oder Signale aus der oder den Steuereinheiten der Hubvorrichtungen im Hubsystem an die ortsfeste Steuerung weiterleiten.

Die Kommunikation zwischen der zumindest einen mobilen Steuerungseinrichtung und der ortsfesten Steuerung kann über Funk, Bluetooth oder weiteren drahtlosen Verbindungen erfolgen.

Des Weiteren ist bevorzugt vorgesehen, dass die Hubvorrichtungen des Hubsystems gemäß einer ersten Ausführungsform als eine Ein-Säulen-Hebevorrichtung ausgebildet sind. Solche Ein-Säulen-Hebevorrichtungen werden paarweise einander gegenüberliegend aufgestellt. Bevorzugt greift jedes Paar der Ein-Säulen-Hebevorrichtungen an einer Achse eines Fahrzeuges an. Alternativ kann die Hubvorrichtung des Hubsystems als eine Zwei-Säulen-Hebevorrichtung ausgebildet sein. Bei dieser Ausgestaltung ist vorgesehen, dass an jeder Hubsäule zwei vorzugsweise schwenkbare Tragarme vorgesehen sind, die bevorzugt an einem Chassis angreifen. Die Zwei-Säulen-Hebevorrichtungen sind bevorzugt entlang einer Achse in einem Arbeitsraum spiegelbildlich einander gegenüberliegend positioniert. Eine weitere alternative Ausgestaltung der Hubvorrichtung stellt eine Unterflurhebevorrichtung dar. Diese Unterflurhebevorrichtungen sind in einen Boden eingelassen. Vorteilhafterweise sind diese in einer Rinne im Boden verfahrbar vorgesehen, so dass diese im Abstand aufeinander einstellbar sind, um an dem Fahrzeug zumindest paarweise anzugreifen. Eine weitere alternative Ausführungsform der Hubvorrichtung sieht vor, dass diese als Fahrschienen-Hebevorrichtung ausgebildet ist. Bevorzugt bilden zwei parallel zueinander ausgerichtete Fahrschienen-Hebevorrichtungen ein Hubsystem. Auf diese Fahrschienen-Hebevorrichtungen kann ein Fahrzeug vollständig auffahren. Auch können mehrere Fahrschienen-Hebevorrichtungen in Reihe hintereinander angeordnet sein, um längere Fahrzeuge oder aus mehreren Teilen bestehende Fahrzeuge aufzunehmen.

Die der Erfindung zugrundeliegende Aufgabe wird des Weiteren durch ein Verfahren zur Steuerung eines Hubsystems, bestehend aus mehreren Hubvorrichtungen, gelöst, bei welchem ein Steuerungssystem mit mehreren Steuereinheiten und einer Steuerungseinrichtung zur Ansteuerung des Hubsystems eingesetzt wird, wobei die Steuereinheiten und die Steuerungseinrichtung einen Sender und Empfänger aufweisen, durch welche Steuersignale drahtlos übertragen werden und wobei die Steuerungseinrichtung und die Steuereinheiten Datenschnittstellen aufweisen, durch welche zumindest ein Anwesenheitssignal der Steuerungseinrichtung an die jeweilige Steuereinheit übertragen wird und bei dem die Datenschnittstelle von der Steuereinheit mit einem Signalkegel abweichend zur Ausrichtung des Lastaufnahmemittels ausgerichtet wird. Erst nach der Positionierung der Steuerungseinrichtung innerhalb des Signalkegels der Datenschnittstelle von der Steuereinheit kann ein Austausch des Anwesenheitssignals und des Steuersignals erfasst werden. Sofern das Anwesenheitssignal als auch das Steuersignal durch die Steuereinheit erfasst werden, wird das Steuersignal zum Ansteuern des Hubsystems weitergeleitet, das heißt, dass die Lastaufnahmemittel der jeweiligen Hubvorrichtung auf oder ab bewegt werden oder dass ein Nothalt durchgeführt wird.

Des Weiteren ist vorgesehen, dass bei einem Empfang des Anwesenheitssignals und des Steuersignals von der Steuerungseinrichtung durch die Steuereinheit in einem Zeitfenster die Ansteuerung der Hubvorrichtungen freigegeben wird. Bevorzugt weicht das Anwesenheitssignal von dem Steuersignal ab. Dies erhöht die Sicherheit bei der Bedienung des Hubsystems.

Des Weiteren ist bevorzugt vorgesehen, dass bei einem zeitgleichen Empfang des Anwesenheitssignals und des Steuersignals durch die Steuereinheit die weitere Ansteuerung der Hubvorrichtungen durch die Steuersignale freigegeben wird. Dadurch kann eine noch höhere Sicherheitsstufe für den Betrieb des Hubsystems erreicht werden.

Des Weiteren ist bevorzugt vorgesehen, dass nach der Freigabe zur Ansteuerung der Hubvorrichtungen durch die Steuerungseinrichtung weitere Funktionen angesteuert werden. Beispielsweise kann eine Beleuchtung am Hubsystem ein- und ausgeschaltet werden. Des Weiteren kann die Auswahl eines Lastansetzmodus gewählt werden. Weitere Zusatzfunktionen wie der Betrieb eines zum Hubsystem gehörenden zusätzlichen Antriebssystems, insbesondere Achsfreiheber bei einer Fahrflächenhebebühne, ein Zusatzheber, ein Gelenkspieltester, eine Zusatzeinheit zum Abdecken von Fundamentvertiefungen sowie ein Verfahren einzelner Hubelemente zueinander in Längsrichtung kann dadurch ermöglich sein.

Gemäß einer bevorzugten Ausgestaltung des Verfahrens ist vorgesehen, dass zum Heben von einem Fahrzeug eine Lastaufnahme der Hubvorrichtung bzw. der Hubvorrichtungen bis zum Ansetzen an dem Rad oder den Rädern oder an einem Chassis des Fahrzeugs durch die Steuerungseinrichtung angesteuert wird. Vorzugsweise werden darauffolgend die Hubvorrichtungen des Hubsystems zum Anheben des Fahrzeuges synchronisiert durch die Steuereinheiten angesteuert. Dieser Ansteuerungsmodus zum Heben des Fahrzeugs ermöglicht, dass durch den Benutzer eine Sichtkontrolle zum ordnungsgemäßen Ansetzen der zumindest einen Lastaufnahme der Hubvorrichtung bzw. der Hubvorrichtungen am Fahrzeug erfolgt. Alternativ kann vorgesehen sein, dass eine Ansetzphase der Lastaufnahme der Hubvorrichtung bzw. der Hubvorrichtungen durch die Steuerungseinrichtung angesteuert wird, um ein Ansetzen der Lastaufnahme an dem oder den Rädern oder dem Chassis des Fahrzeuges durchzuführen. Dabei ist vorteilhafterweise vorgesehen, dass eine Ansetzkraft während der Ansetzphase abgefragt wird, welche beim Ansetzen der Lastaufnahme an den Rädern oder des Chassis erfolgt. Bei einer vorbestimmten Ansetzkraft wird die Ansetzphase stillgesetzt. Dabei greift die Lastaufnahme der Hubvorrichtung an dem Rad oder den Rädern oder des Chassis des Fahrzeuges an. Bevor das Anheben des Fahrzeugs erfolgt, wird bevorzugt eine Bestätigung abgefragt, dass die Lastaufnahme ordnungsgemäß an dem oder den Rädern oder dem Chassis des Fahrzeugs angreift.

Eine weitere vorteilhafte Ausgestaltung des Verfahrens sieht vor, dass bei einem Empfang des Anwesenheitssignals durch die Steuerungseinrichtung Informationen von der gegenüberliegenden Hubvorrichtung und/oder der Hubvorrichtungen im Hubsystem an der Steuereinheit abgefragt und an die gegenüberliegende Steuerungseinrichtung übermittelt werden und vorzugsweise auf einem Display der Steuerungseinrichtung wahlweise ausgegeben werden. Dadurch kann der Benutzer in einfacher Weise den aktuellen Zustand der gegenüberliegenden Hubvorrichtung abfragen. Auch kann eine Zustandsabfrage der in das Hubsystem eingebundenen Hubvorrichtungen ermöglicht sein. Dabei kann beispielsweise die Aktiv- und/oder Passivschaltung der Steuereinheit abgefragt werden sowie weitere Parameter, beispielsweise Höhe der Lastaufnahmen, Anzahl der konfigurierten Hubvorrichtungen und/oder ggf. auftretende Störungen und/oder ein Ladezustand von Akkumulatoren, welche für einen autarken Betrieb der Hubvorrichtungen vorgesehen sind.

Des Weiteren ist bevorzugt vorgesehen, dass die Position des Benutzers zur Hubvorrichtung, der die Steuerungseinrichtung bedient, erkannt und vorzugsweise in einem Display der Steuerungseinrichtung ausgegeben wird. Dadurch kann der Benutzer bei Hubsystemen, die sich über einen größeren Arbeitsraum erstrecken, eine einfache Zuordnung der Position des Benutzers zu der gegenüberliegenden Hubvorrichtung ermöglichen.

Des Weiteren ist bevorzugt vorgesehen, dass zum Konfigurieren des Hubsystems die Steuerungseinrichtung aufeinanderfolgend zu jeder Steuereinheit an der Hubvorrichtung innerhalb des Signalkegels der Datenschnittstelle der Steuereinheit positioniert wird und darauffolgend ein Teachvorgang mit der in das Hubsystem einzubindenden Hubvorrichtung durchgeführt wird und nach Abschluss des letzten Teachvorgangs die Konfiguration durch ein Betätigungssignal abgeschlossen wird. Dies ermöglicht eine schnelle und einfache Konfiguration des Hubsystems. Insbesondere sind mobile Hubvorrichtungen wie beispielsweise Radgreifer vorgesehen, welche paarweise einander gegenüberliegend angeordnet sind, um an einer Achse eines Fahrzeuges anzugreifen. Dadurch können auch in einfacher Weise ein Hubsystem mit einer Mehrzahl von Hubvorrichtungen beispielsweise für mehrachsige Fahrzeuge oder Schienenfahrzeuge schnell konfiguriert werden.

Des Weiteren ist bevorzugt vorgesehen, dass jede Steuereinheit eine Montageschnittstelle zur Befestigung einer Hubvorrichtung und eine Bedienoberfläche aufweist, wobei die Steuereinheiten und die Steuerungseinrichtung jeweils einen Sender und einen Empfänger umfassen, um Steuersignale drahtlos zu übertragen und wobei an jeder Steuereinheit und der Steuerungseinrichtung jeweils eine Datenschnittstelle für die drahtlose Übertragung eines Anwesenheitssignals vorgesehen ist, wobei die Datenschnittstelle an der Steuereinheit einen Signalkegel aufweist, der abweichend von der Montageschnittstelle oder Bedienoberfläche der Steuereinheit ausgerichtet ist. Die Montageschnittstelle und/oder die Bedienoberfläche der Steuereinheit kann vertikal ausgerichtet an einer Hubsäule sein. Die Montageschnittstelle ist vorzugsweise als Montageplatte ausgebildet. Die Montageschnittstelle kann auch horizontal durch einen an der Hubsäule vorgesehenen Montagewinkel sein.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1 eine perspektivische Ansicht eines Hubsystems mit einem angehobenen Fahrzeug,
Figur 2 eine perspektivische Seitenansicht einer Hubvorrichtung des Hubsystems in einer abgesenkten Position,
Figur 3 eine perspektivische Ansicht der Hubvorrichtung gemäß Figur 2 in einer angehobenen Position,
Figur 4 eine schematische Ansicht auf eine Steuerungseinrichtung eines Steuerungssystems der Hubvorrichtung gemäß Figur 1,
Figur 5 eine schematische Seitenansicht der Hubvorrichtung mit einer dieser zugeordneten Steuerungseinrichtung zur drahtlosen Kommunikation,
Figur 6 eine schematische Draufsicht auf die Anordnung gemäß Figur 5,
Figur 7 eine schematische Ansicht zur Konfiguration eines Hubsystems mit mehreren Hubvorrichtungen,
Figur 8 eine perspektivische Ansicht einer alternativen Ausführungsform des Hubsystems zu Figur 1,
Figur 9 eine perspektivische Ansicht einer weiteren alternativen Ausführungsform zu Figur 1, und
Figur 10 eine perspektivische Ansicht einer weiteren alternativen Ausführungsform des Hubsystems zu Figur 1.

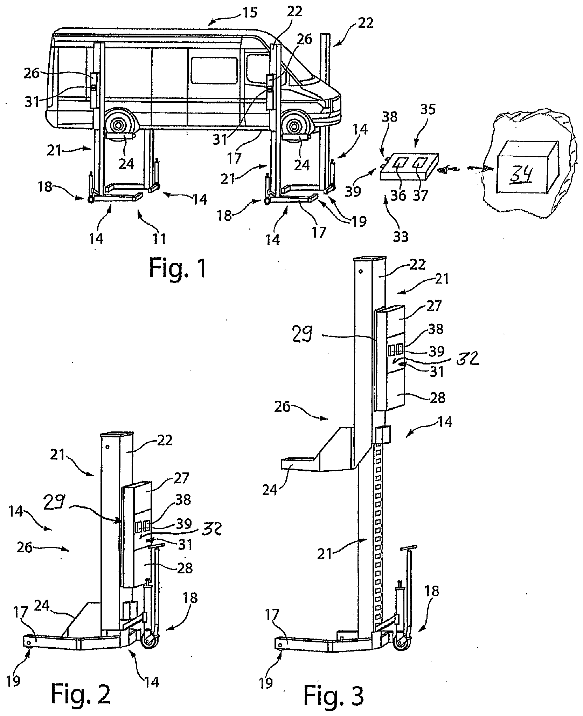

In Figur 1 ist ein Hubsystem 11 dargestellt. Dieses Hubsystem 11 umfasst mehrere Hubvorrichtungen 14, die zu einem Hubsystem 11 konfiguriert sind. Durch diese Hubvorrichtungen 14 ist das Anheben eines Fahrzeugs 15, beispielsweise für Wartungs-, Inspektions- und/oder Reparaturarbeiten, möglich. Alternativ können Schienenfahrzeuge oder sonstige Fahrzeuge durch ein solches Hubsystem 11 angehoben werden. Auch können verschiedene Lasten angehoben werden. Jede Hubvorrichtung 14 umfasst ein Grundgestell 17, welches am Boden aufliegt. An diesem Grundgestell 17 kann bevorzugt ein Fahrwerk oder Lenkfahrwerk 18 vorgesehen sein Diesem Lenkfahrwerk 18 gegenüberliegend sind an dem Grundgestell 17 bevorzugt Laufrollen 19 angeordnet. Dadurch ist eine mobile Hubvorrichtung 14 ausgebildet. Diese kann an den jeweiligen Einsatzort verfahren werden.

An dem Grundgestell 17 ist eine Hubsäule 21 vorgesehen. Entlang der Hubsäule 21 ist ein Träger 22 auf und ab bewegbar. An dem Träger 22 ist ein Lastaufnahmemittel 24 vorgesehen. Dieses ist gemäß dem Ausführungsbeispiel gabelförmig als Radgreifer ausgebildet. Das Lastaufnahmemittel 24 kann auch weitere alternative Ausführungsformen aufweisen.

An dem Träger 22 ist eine Antriebseinheit 26 vorgesehen. Diese Antriebseinheit 26 kann elektrohydraulisch, hydraulisch oder mechanisch oder dergleichen ausgebildet sein. Diese Antriebseinheit 26 umfasst zumindest einen Akkumulator 27. Des Weiteren ist gemäß der beispielhaften Ausführungsform ein Hydraulikaggregat 28 vorgesehen, durch welches ein Hydraulikzylinder innerhalb der Hubsäule 21 ein- und ausfahrbar angesteuert ist. An dem Träger 22 ist des Weiteren eine Steuereinheit 31 vorgesehen. Die Steuereinheit 31 weist bevorzugt eine Montageschnittstelle 29 auf, die komplementär zu einer Anschlussschnittstelle an der Hubsäule 29 ausgebildet ist. Dadurch ist eine einfache Montage der Steuereinheit 31 ermöglicht. Die Anschlussschnittstelle kann auch an der Antriebseinheit 26 vorgesehen sein. Die Steuereinheit 31 umfasst eine Bedienoberfläche 32, die vorzugsweise vertikal ausgerichtet ist. Die Bedienoberfläche 32 ist bevorzugt für den Benutzer gut sichtbar und zugänglich zu der Hubsäule 21 ausgerichtet. Durch diese Steuereinheit 31 wird das Hydraulikaggregat 28 angesteuert. Eine solche Hubvorrichtung 14 ist beispielsweise aus der WO 2010/112200 A1 bekannt, auf welche vollumfänglich Bezug genommen wird.

Das Hubsystem 11 umfasst ein Steuersystem 33, welches die Steuereinheiten 31 umfasst, die jeweils an der Hubvorrichtung 14 vorgesehen sind. Des Weiteren umfasst das Steuersystem 33 eine Steuerungseinrichtung 35, die als mobile Steuerungseinrichtung 35, insbesondere als Fernbedienung, ausgebildet ist. Diese Steuerungseinrichtung 35 umfasst zumindest ein Display 36 sowie ein Tastenfeld 37. Des Weiteren ist eine Datenschnittstelle 38 für ein Auswertesignal und einen Sender/Empfänger 39 für ein Steuersignal vorgesehen.

Die Steuereinheit 31 umfasst ebenfalls eine Datenschnittstelle 38 für das Auswertesignal sowie komplementär zur Steuerungseinrichtung 35 einen Empfänger/Sender 39.

Das Steuerungssystem 33 ist gemäß einer ersten Ausführungsform derart ausgestaltet, dass die Steuerungseinrichtung 35 die Rolle eines Masters einnimmt und die Steuereinheiten 31 an den jeweiligen Hubvorrichtungen 14 die Rolle von Slaves einnehmen. Durch die Steuerungseinrichtung 35 kann jede Steuereinheit 31 einzeln angesteuert werden. Die als Slave betriebenen Steuereinheiten 31 der Hubvorrichtungen 14 im Hubsystem 11 sind miteinander gekoppelt. Sofern eine Kommunikation zwischen der Steuerungseinrichtung 35 und einer Steuereinheit 31 aktiviert ist, kann eine Steuereinheit 31 als Slave durch die Steuerungseinrichtung 35 angesteuert werden. Darauffolgend können alle als Slave betriebenen Steuereinheiten 31 aktiviert werden. Gemäß einer Ausführungsform können die als Slave betriebenen Steuereinheiten 31 jeweils direkt von der Steuerungseinrichtung 35 das Steuersignal erhalten. Alternativ kann das Steuersignal der Steuerungseinrichtung 35 an die durch die Steuerungseinrichtung 35 gegenüberliegende und aktivierte, als Slave betriebene Steuereinheit 31 übertragen werden, und diese Steuereinheit 31 leitet das Steuersignal an die weiteren, im Hubsystem 11 eingebundenen Steuereinheiten 31 der Hubvorrichtungen 14 weiter. Somit kann ein Heben und Senken der Lastaufnahmemittel 24 der Hubvorrichtungen 14, die in das Hubsystem 11 eingebunden sind, gemeinsam erfolgen.

Alternativ kann eine Steuerung 34 ortsfest in einem Arbeitsraum positioniert sein. Diese ortsfeste Steuerung 34 kann als Master ausgebildet bzw. programmiert sein. Die zumindest eine Steuerungseinrichtung 35 kommuniziert zum einen mit der als Master ausgebildeten ortsfesten Steuerung 34 und kann die jeweilige Hubvorrichtung 14 als Slave ansteuern. In diesem Fall bildet die Steuerungseinrichtung 35 einen mobilen Master, der mit der ortsfesten Steuerung 34 kommuniziert.

In Figur 2 ist eine schematische Ansicht der Hubvorrichtung 14 in einer Ausgangsposition dargestellt. Bei dieser Ausführungsform ist vorgesehen, dass der Träger 22 die Hubsäule 21 umgibt. Alternativ kann vorgesehen sein, dass der Träger 22 innerhalb der Hubsäule 21 geführt ist.

In Figur 3 ist die Hubvorrichtung 14 gemäß Figur 2 beispielsweise in einer Arbeitsposition dargestellt.

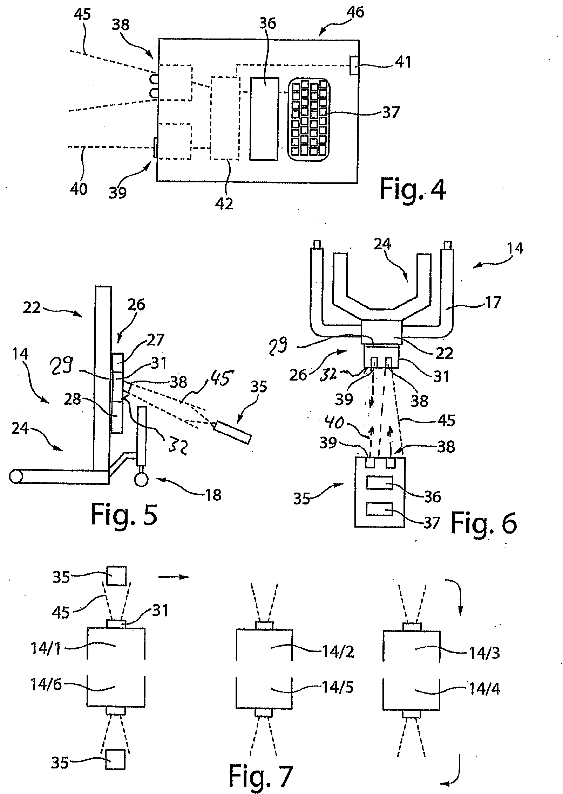

Die Steuerungseinrichtung 35 ist schematisch in Figur 4 näher dargestellt. Diese umfasst das Tastenfeld 37 zur Eingabe von Befehlen. Des Weiteren ist bevorzugt das Display 36 vorgesehen. Beides kann auch ineinander integriert und als Touch-Screen ausgebildet sein. Die Steuerungseinrichtung 35 umfasst bevorzugt eine Ladeschnittstelle 41, um zumindest einen in der Steuerungseinrichtung 35 angeordneten Akkumulator aufzuladen. Alternativ kann vorgesehen sein, dass die Akkumulatoren austauschbar sind, so dass die Ladeschnittstelle 41 entfallen kann. Des Weiteren umfasst die Steuerungseinrichtung 35 einen Mikrocontroller 42, durch welchen eine Datenverarbeitung sowie eine Ausgabe und ein Empfang von Anwesenheits- und Steuersignalen erfolgt. Des Weiteren umfasst die Steuerungseinrichtung 35 eine Datenschnittstelle 38, durch welche ein Anwesenheitssignal ausgegeben oder empfangen wird. Diese Datenschnittstelle 38 ist bevorzugt mit einem Infrarotsender und/oder einem Infrarotempfänger ausgestattet, so dass ein Infrarotsignal als Anwesenheitssignal ausgegeben und empfangen werden kann. Des Weiteren umfasst die Steuerungseinrichtung 35 einen Sender/Empfänger 39. Bevorzugt ist der Empfang und das Aussenden von Funksignalen als Steuersignale vorgesehen.

Die Richtung der Steuersignale der Sender/Empfänger 39 und die Datenschnittstelle 38 sind bevorzugt gleich ausgerichtet an einem Gehäuse 46, insbesondere an einer Stirnfläche des Gehäuses 46, vorgesehen. Dadurch ist ein Signalkegel 45 des Anwesenheitssignals als auch eine Signalrichtung 40 oder ein Signalkegel von Funksignalen als Steuersignal gleich ausgerichtet.

In Figur 5 ist eine schematische Seitenansicht der Hubvorrichtung 14 dargestellt. An der Steuereinheit 31 ist die Datenschnittstelle 38 für das Anwesenheitssignal vorgesehen. Dabei ist der Signalkegel 45 der Datenschnittstelle 38 gegenüber einer Horizontalen nach unten geneigt ausgerichtet. Dies kann bevorzugt durch die Ausrichtung der Datenschnittstelle 38 selbst oder mittels optischen Elementen erfolgen. Durch die Neigung des Signalkegels 45 gegenüber der Horizontalen nach unten wird der Vorteil erzielt, dass sonstige in einem Bereich des Hubsystems 11 gesendete Signale nicht oder nur schwer erfasst werden.

In Figur 6 ist eine Draufsicht auf die Anordnung gemäß Figur 5 dargestellt. Aus diesen beiden Ansichten gemäß Figur 5 und 6 wird deutlich, dass zur Ansteuerung der Steuereinheit 31 an der Hubvorrichtung 14 mit der Steuerungseinrichtung 35 eine definierte Anordnung der Steuerungseinrichtung 35 zur Steuereinheit 31 erforderlich ist. Die Steuerungseinrichtung 35 ist mit der Datenschnittstelle 38 und dem Sender/Empfänger 39 auf die Datenschnittstelle 38 der Steuereinheit 31 und dem Sender/Empfänger 39 der Steuereinheit 31 hin auszurichten. Des Weiteren ist erforderlich, dass die Steuerungseinrichtung 35 innerhalb des Signalkegels 45 der Datenschnittstelle 38 der Steuereinheit 31 zu positionieren ist. Dadurch wird ermöglicht, dass der Bediener, der die Steuerungseinrichtung 35 in der Hand hält, außerhalb eines Arbeitsraumes steht. Darüber hinaus kann der Bediener auch entfernt zur Hubvorrichtung 14 sich zur Ansteuerung des Hubsystems 11 aufhalten.

Der Arbeitsraum des Hubsystems 11 wird durch zwei einander gegenüberliegende oder gemäß Figur 1 durch vier einander zugeordnete Hubvorrichtungen 14 oder mehrere einander zugeordnete Hubvorrichtungen 14 gebildet bzw. durch eine Fläche unterhalb des anzuhebenden Fahrzeuges 15.

Die Steuerungseinrichtung 35 sendet ein Anwesenheitssignal und ein Steuersignal aus. Sofern diese beiden Signale innerhalb eines Zeitfensters, insbesondere zeitgleich, von der Steuereinheit 31 empfangen und verarbeitet werden, ist die Steuereinheit 31 aktiv. Darauffolgend kann das Steuersignal an die Antriebseinheit 26 zum Betrieb der Hubvorrichtung 14 weitergeleitet werden. Sofern ein zeitversetzter Empfang des Anwesenheitssignals von der Datenschnittstelle 38 der Steuereinheit 31 und des Steuersignals von dem Sender/Empfänger 39 durch die Steuereinheit 31 erfasst wird, bleibt die Steuereinheit 31 inaktiv.

Durch die Steuerungseinrichtung 35 kann ein Heben, Senken, ein Nothalt, eine Selektion der ansteuerbaren Hubvorrichtungen, eine Konfiguration des entsprechenden Hubsystems mit einer Code-Nummer bei der Inbetriebnahme, ein Ein-/Ausschalten einer Beleuchtung am Hubsystem, eine Auswahl eines Lastansetzmodus, eine Ansteuerung eines motorischen Fahrantriebes, eine Hubvorrichtung sowie eine Auswahl eines Funkkanals angesteuert werden.

Auch ist durch diese Steuerungseinrichtung 35 eine Kommunikation mit externen Netzwerken sowie zur Informationsanzeige beispielsweise einer Bedienerführung, Betriebsanleitung, Serviceanleitung möglich. Auch kann dadurch eine Fernwartung bzw. Ferndiagnose angesteuert bzw. durchgeführt werden. Ebenso ist möglich, dass diese Steuerungseinrichtung 35 zu einem Software-Update der Steuereinheiten 31 an den Hubvorrichtungen 14 eingesetzt wird.

Bevorzugt ist an jeder Steuereinheit 31 ebenfalls zumindest ein Display 36 vorgesehen, um einen Betriebsstatus abzulesen. Bevorzugt kann auch an der Steuereinheit 31 ein Tastenfeld 37 oder eine Kombination des Displays 36 und Tastenfelds 37 als Touch-Screen vorgesehen sein. Dadurch kann auch die Möglichkeit gegeben sein, das Hubsystem 11 über die Steuereinheit 31 direkt anzusteuern.

Sofern zumindest eine Steuereinheit 31 durch die Steuerungseinrichtung 35 aktiviert ist, können die Daten und/oder Informationen der zumindest einen Steuereinheit 31 auch auf dem Display der Steuerungseinrichtung 35 abgerufen und/oder aufgezeigt werden.

In Figur 7 ist eine schematische Ansicht zur Konfiguration von beispielsweise drei paarweise einander gegenüber positionierten Hubvorrichtungen 14 zu einem Hubsystem 11 dargestellt. Zur Konfiguration dieser Hubvorrichtungen 14 zu einem Hubsystem 11 wird die Steuerungseinrichtung 35 einer ersten Hubvorrichtung 14/1 zugeordnet. Bevorzugt erkennt die Steuerungseinrichtung 35, dass diese der Hubvorrichtung 14/1 zugeordnet ist. Darauffolgend wird der Programmmodus "Konfiguration" aufgerufen. Darauffolgend wird die Steuerungseinrichtung 35 bevorzugt zur Steuereinheit 31 in der in Figur 5 und 6 dargestellten Position positioniert. Durch das innerhalb des Zeitfensters empfangene Anwesenheitssignal und Steuersignal wird die weitere Kommunikation zwischen der Hubvorrichtung 14/1 und Steuerungseinrichtung 35 freigegeben. Nach Abschluss des Teachvorganges wird dieser Vorgang quittiert und die Steuerungseinrichtung 35 zur Hubvorrichtung 14/2 ausgerichtet. Die bevorzugte Erkennung der Zuordnung und der darauffolgende Teachvorgang wird wiederholt. Dies wird aufeinanderfolgend für die Hubvorrichtung 14/3, 14/4, 14/5 und 14/6 durchgeführt. Darauffolgend wird der Abschluss für die Konfiguration bestätigt. Das Steuerungssystem 33 ist somit auf sechs Hubvorrichtungen 14 konfiguriert. Dieses Hubsystem 11 kann mittels der Steuerungseinrichtung 35 über jede konfigurierte Hubvorrichtung 14 angesteuert werden bzw. der Betriebsstatus abgefragt werden.

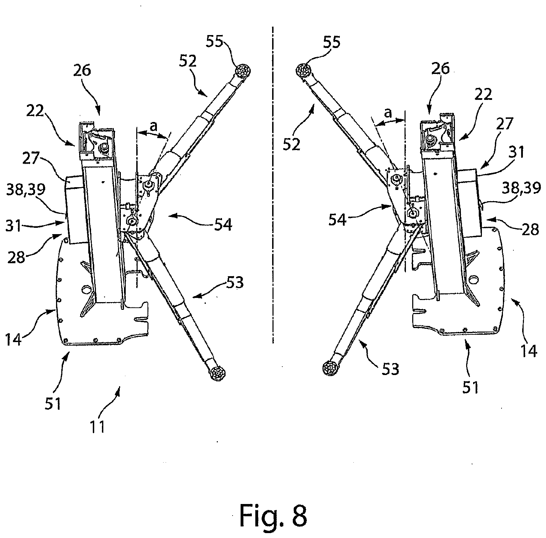

In Figur 8 ist eine perspektivische Ansicht einer alternativen Ausführungsform der Hubvorrichtungen 14 des Hubsystems 11 zu Figur 1 dargestellt. Bei dieser Ausführungsform ist vorgesehen, dass die Hubvorrichtungen 14 stationär ausgebildet sind. Diese Hubvorrichtungen 14 weisen eine Grundplatte 51 auf, welche fest mit einem Boden verbunden ist. Beispielsweise kann eine Verschraubung erfolgen. An der Grundplatte 51 ist die Hubsäule 21 befestigt. An der Hubsäule 21 sind die Antriebseinheit 26, der Akkumulator 27, das Hydraulikaggregat 28 und die Steuereinheit 31 analog zu den Hubvorrichtungen 14 in Figuren 1 bis 6 vorgesehen.

Bei dieser Ausführungsform ist das Lastaufnahmemittel 24 abweichend zu dem in den Figuren 1 bis 3 dargestellten Lastaufnahmemittel 24 ausgebildet. Das Lastaufnahmemittel 24 gemäß Figur 8 weist einen ersten Tragarm 52 und einen zweiten Tragarm 53 auf, die vorzugsweise unabhängig voneinander schwenkbar an einem Träger 54 vorgesehen sind. Der Träger 54 ist entlang der Hubsäule 21 auf und ab bewegbar. Die Tragarme 52, 53 sind bevorzugt teleskopierbar. Am jeweiligen äußeren Ende des Tragarmes 52, 53 ist ein Auflageelement 55 vorgesehen, welches an einem Chassis eines Fahrzeugs in einer Ansetzposition zum Anheben des Fahrzeuges angreift.

Die Steuereinheit 31 ist wiederum gegenüberliegend zum Lastaufnahmemittel 24 ausgerichtet.

Die vorstehenden Ausführungen bzgl. der Konfiguration des Hubsystems 11 gemäß Figur 8 sowie die Kommunikation der Steuerungseinrichtung 35 mit der Steuereinheit 31 und/oder die Konfiguration des Hubsystems 11 entspricht dem vorbeschriebenen Ausführungsbeispiel gemäß den Figuren 1 bis 7.

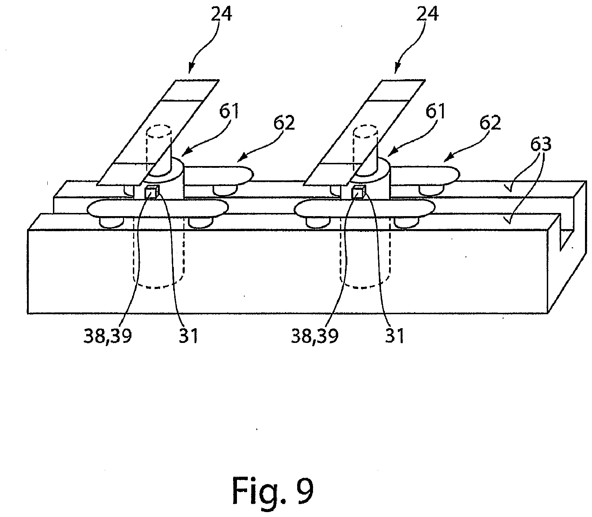

In Figur 9 ist eine perspektivische Ansicht einer weiteren alternativen Ausführungsform des Hubsystems 11 zu Figur 1 und Figur 8 dargestellt. Bei dieser Ausführungsform ist vorgesehen, dass die Hubvorrichtungen 14 als eine Unterflurhebevorrichtung ausgebildet ist. Jede Hubvorrichtung 14 umfasst einen Stempel 61, durch welchen die Lastaufnahme 24 auf und ab bewegbar ist. Dieser Stempel 61 ist bevorzugt an einem verfahrbaren Wagen 62 vorgesehen, welcher entlang von Laufschienen 63, die vorzugsweise gegenüber einem Boden eines Arbeitsraumes vertieft sind, verfahrbar ist. Diese Anordnung ermöglicht, dass die Hubvorrichtungen 14 entlang der Laufschienen 63 verfahrbar und individuell auf die Länge des Fahrzeugs einstellbar sind.

An einem Gehäuse des Stempels 61 ist die Steuereinheit 31 vorgesehen. Die an der Steuereinheit 31 angeordnete Datenschnittstelle 38 und/oder der Sender/Empfänger 39 weist seitlich nach außen, so dass jede Hubvorrichtung 14 mit der Steuerungseinrichtung 35 kommuniziert und ansteuerbar ist. Die vorbeschriebene Steuerung der Hubvorrichtungen 14 als auch die Konfiguration des Hubsystems 11 entspricht in Analogie den vorbeschriebenen Ausführungsformen.

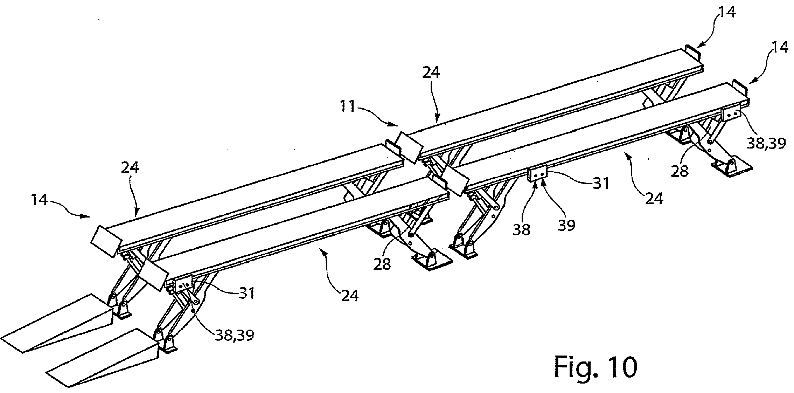

In Figur 10 ist eine perspektivische Ansicht einer alternativen Ausführungsform des Hubsystems 11 zu Figur 1 dargestellt. Bei diesem Hubsystem 11 sind die Hubvorrichtungen 14 als Fahrschienen-Hebevorrichtungen ausgebildet. Jede dieser Hubvorrichtungen 14 weist als Lastaufnahme 24 eine Fahrschiene auf. Zwei einander gegenüberliegende Hubvorrichtungen 14 mit parallel ausgerichteten Fahrschienen bilden das Hubsystem 11. Bei langen Fahrzeugen mit Anhängern oder auch bei mehreren Schienenfahrzeugen können mehrere Hubvorrichtungen 14 in Reihe zueinander angeordnet sein. An jeder dieser Hubvorrichtungen 14 ist eine Steuereinheit 31 vorgesehen. Insbesondere kann an jeder Lastaufnahme 24, insbesondere Fahrschiene der Hubvorrichtung 14 eine Steuereinheit 31 vorgesehen sein. Diese Steuereinheit 31 kann auch innerhalb eines Profils der Fahrschiene integriert sein. Bevorzugt kann dann in einer Seitenwange der Fahrschiene ein Fenster eingebracht sein, in welchem die Datenschnittstelle 38 und der Sender/Empfänger 39 der Steuereinheit 31 positioniert ist. Dadurch kann eine seitliche Zugänglichkeit zur Hubvorrichtung 14 ermöglicht sein, das heißt, die Kommunikation der Steuerungseinrichtung 35 mit der Steuereinheit 31 außerhalb des Arbeitsraumes erfolgen. Diese Hubvorrichtungen 14 können analog zu den Hubvorrichtungen 14 gemäß dem ersten Ausführungsbeispiel in den Figuren 1 bis 7 angesteuert und/oder konfiguriert werden.

## Patentansprüche

1. Hubsystem, insbesondere zum Heben und Senken von Fahrzeugen, welches mehrere Hubvorrichtungen (14) umfasst, die mit einem Steuerungssystem (33) des Hubsystems ansteuerbar sind, wobei das Steuerungssystem (33) eine Steuerungseinrichtung (35) und mehrere Steuereinheiten (31) umfasst, wobei an jeder Hubvorrichtung (14) eine Steuereinheit (31) vorgesehen ist, welche ein Lastaufnahmemittel (24) der Hubvorrichtung (14) ansteuert, wobei getrennt zu den Steuereinheiten (31) die Steuerungseinrichtung (35) vorgesehen ist, wobei die Steuereinheiten (31) und die Steuerungseinrichtung (35) jeweils einen Sender/Empfänger (39) umfassen, um ein Steuersignal drahtlos zu übertragen, wobei an jeder Steuereinheit (31) und an der Steuerungseinrichtung (35) jeweils eine Datenschnittstelle (38) für die drahtlose Übertragung eines Anwesenheitssignals vorgesehen ist und dass die Datenschnittstelle (38) an der Steuereinheit (31) einen Signalkegel (45) aufweist, der abweichend zum Lastaufnahmemittel (24) ausgerichtet ist, **dadurch gekennzeichnet, dass** der Signalkegel (45) der Datenschnittstelle (38) und eine Signalrichtung des Senders/Empfängers (39) für das Steuersignal gleich ausgerichtet sind und dass die Steuereinheit (31) so angeordnet ist, dass bei einem Empfang des Anwesenheitssignals und des Steuersignals von der Steuerungseinrichtung (35) in einem Zeitfenster die Ansteuerung der Hubvorrichtung (14) freigibt.

2. Hubsystem nach Anspruch 1, **dadurch gekennzeichnet, dass** zwischen zwei einander gegenüberliegenden oder mehreren paarweise einander gegenüberliegenden Hubvorrichtungen (14) ein Arbeitsraum gebildet ist und der Signalkegel (45) der jeweiligen Datenschnittstelle (38) von der Steuereinheit (31) außerhalb dieses Arbeitsraumes liegt und/oder dass der Signalkegel (45) der an der Steuereinheit (31) vorgesehenen Datenschnittstelle (38) entgegengesetzt zum Lastaufnahmemittel (24) ausgerichtet ist und vorzugsweise die Steuereinheit (31) ein Display (36) zur Anzeige von zumindest einem Betriebsstatus und/oder ein Tastenfeld (37) und/oder eine Ladeschnittstelle (41) aufweist.

3. Hubsystem nach einem der vorhergehenden Ansprüche, **dadurch gekennzeichnet, dass** der Signalkegel (45) der Datenschnittstelle (38) der Steuereinheit (31) horizontal ausgerichtet oder gegenüber einer Horizontalen nach unten geneigt ausgerichtet ist.

4. Hubsystem nach einem der vorhergehenden Ansprüche, **dadurch gekennzeichnet, dass** die Datenschnittstelle (38) für das Anwesenheitssignal durch einen IR-Empfänger und einen IR-Sender ausgebildet ist und der Sender/Empfänger (39) des Steuersignals abweichend zur Datenschnittstelle (38) ausgebildet ist.

5. Hubsystem nach einem der vorhergehenden Ansprüche, **dadurch gekennzeichnet, dass** die Steuerungseinrichtung (35) innerhalb des Signalkegels (45) der Datenschnittstelle (38) mit der Steuereinheit (31) kommuniziert und die Steuereinheit (31) zur Ansteuerung der Hubvorrichtung (14) bei einem zeitgleichen Empfang des Anwesenheitssignals und des Steuersignals von der Steuerungseinrichtung (35) aktiviert.

6. Hubsystem nach einem der vorhergehenden Ansprüche, **dadurch gekennzeichnet, dass** die Steuerungseinrichtung (35) als Master und die Steuereinheiten (31) als Slaves ausgebildet sind und vorzugsweise mehrere Steuerungseinrichtungen (35) in dem Steuersystem (33) vorgesehen und miteinander gekoppelt sind.

7. Hubsystem nach einem der vorhergehenden Ansprüche, **dadurch gekennzeichnet, dass** eine Steuerungseinrichtung (35) mit einer ortsfesten Steuerung (34) im Arbeitsraum des zumindest einen Hubsystems (11) kommuniziert, die vorzugsweise als Master und/oder als Kommunikationsschnittstelle ausgebildet ist.

8. Verfahren zur Steuerung eines Hubsystems (11) nach einem der Ansprüche 1 bis 7, bestehend aus mehreren Hubvorrichtungen (14), die jeweils ein auf und ab bewegbares Lastaufnahmemittel (24) aufweisen,
- bei dem eine Steuerungssystem (33) zur Ansteuerung der Hubvorrichtungen (14) eingesetzt wird, welches aus einer Steuerungseinrichtung (35) und mehreren getrennt dazu und jeweils an einer Hubvorrichtung (14) angeordneten Steuereinheit (31) besteht,
- wobei die Steuerungseinrichtung (35) und die Steuereinheiten (31) einen Sender/Empfänger (39) aufweisen, durch welche Steuersignale drahtlos übertragen werden,
- bei dem die Steuerungseinrichtung (35) und die Steuereinheiten (31) jeweils Datenschnittstellen (38) aufweisen, durch welche zumindest ein Anwesenheitssignal zwischen der Steuerungseinrichtung (35) und der jeweiligen Steuereinheit (31) übertragen wird und dass die Steuerungseinrichtung (35) innerhalb eines Signalkegels (45) der Datenschnittstelle (38) der Steuereinheit (31) positioniert wird, **dadurch gekennzeichnet, dass** der Signalkegel (45) der Datenschnittstelle (38) und eine Signalrichtung des Senders/Empfängers (39) für das Steuersignal gleich ausgerichtet werden, und
- dass durch eine der Steuereinheiten (31) bei einem Empfang des Auswertesignals und des Steuersignals von der Steuerungseinrichtung (35) in einem Zeitfenster die Ansteuerung der Hubvorrichtungen (14) freigegeben wird.

9. Verfahren nach Anspruch 8, **dadurch gekennzeichnet, dass** bei einem zeitgleichen Empfang des Anwesenheitssignals durch die Datenschnittstelle (38) und des Steuersignals durch den Sender/Empfänger (39) an der Steuereinheit (31) eine Ansteuerung der Hubvorrichtungen (14) freigegeben wird.

10. Verfahren nach einem der Ansprüche 8 oder 9, **dadurch gekennzeichnet, dass** das Anwesenheitssignal abweichend zum Steuersignal ist und beide zeitgleich ausgegeben werden.

11. Verfahren nach einem der Ansprüche 8 bis 10, **dadurch gekennzeichnet, dass** nach der Freigabe der Steuereinheit (31) zur Ansteuerung der Hubvorrichtungen (14) durch die Steuerungseinrichtung (35) weitere Funktionen der Hubvorrichtungen (14) angesteuert werden und vorzugsweise beim Heben eines Fahrzeugs ein Lastaufnahmemittel (24) der Hubvorrichtung (14) bis zu einem Ansetzen an einem Rad oder an Rädern oder an einem Chassis des Fahrzeuges durch die Steuerungseinrichtung (35) angesteuert wird, und vorzugsweise darauffolgend die Hubvorrichtungen (14) des Hubsystems (11) zum Anheben des Fahrzeugs synchronisiert durch die Steuereinheiten (31) angesteuert werden.

12. Verfahren nach einem der Ansprüche 8 bis 11, **dadurch gekennzeichnet, dass** bei einem Empfang des durch die Datenschnittstelle (38) ausgegebenen Anwesenheitssignals durch die Steuerungseinrichtung (35) Informationen an der gegenüberliegenden Hubvorrichtung (14) und/oder der Hubvorrichtungen (14) im Hubsystem (11) von der Steuereinheit (31), durch die der gegenüberliegende Steuerungseinrichtung (35) abgefragt und an diese Steuerungseinrichtung (35) übermittelt werden, und vorzugsweise auf einem Display (36) der Steuerungseinrichtung (35) wahlweise ausgegeben werden.

13. Verfahren nach Anspruch 12, **dadurch gekennzeichnet, dass** die Position des Benutzers zur Hubvorrichtung (14), der die Steuerungseinrichtung (35) bedient, von der Steuerungseinrichtung (35) erkannt und vorzugsweise im Display der Steuerungseinrichtung (35) ausgegeben wird.

14. Verfahren nach einem der Ansprüche 8 bis 13, **dadurch gekennzeichnet, dass** zur Konfiguration des Hubsystems (11) die Steuerungseinrichtung (35) aufeinanderfolgend zu jeder Steuereinheit (31) der in das Hubsystem (11) einzubindenden Hubvorrichtung (14) innerhalb des Signalkegels (45) der Datenschnittstelle (38) der Steuereinheit (31) positioniert und darauffolgend einen Teachvorgang mit der in das Hubsystem (11) einzubindenden Hubvorrichtung (14) durchgeführt wird und nach Abschluss des letzten Teachvorganges der einzubindenden Hubvorrichtung (14) die Konfiguration des Hubsystems (11) durch ein Bestätigungssignal abgeschlossen wird.

15. Hubsystem (11) nach einem der Ansprüche 1 bis 7, wobei jede Steuereinheit (31) eine Montageschnittstelle (29) zur Befestigung an der Hubvorrichtung (14) und eine Bedienoberfläche (32) aufweist,
und wobei die Datenschnittstelle (38) an der Steuerungseinheit (31) einen Signalkegel (45) aufweist, der abweichend zur Montageschnittstelle (29) oder zur Bedienoberfläche (32) ausgerichtet ist.

## Claims

1. Lifting system, in particular for lifting and lowering vehicles, which comprises a plurality of lifting devices (14) which can be controlled by a control system (33) of the lifting system, the control system (33) comprising a control device (35) and a plurality of control units (31), a control unit (31) being provided on each lifting device (14), which controls a load receiving means (24) of the lifting device (14), the control device (35) being provided separately from the control units (31), the control units (31) and the control device (35) each comprising a transmitter/receiver (39) in order to transmit a control signal wirelessly, wherein a data interface (38) for the wireless transmission of a presence signal is provided on each control unit (31) and on the control device (35), and in that the data interface (38) on the control unit (31) has a signal cone (45) which is aligned differently to the load-carrying means (24), **characterized in that** the signal cone (45) of the data interface (38) and a signal direction of the transmitter/receiver (39) for the control signal are aligned in the same way, and **in that** the control unit (31) is arranged such that when the presence signal and the control signal are received by the control device (35) in a time window, the activation of the lifting device (14) is enabled.

2. Lifting system according to claim 1, **characterized in that in that** a working space is formed between two lifting devices (14) located opposite one another or several lifting devices (14) opposite one another in pairs and the signal cone (45) of the respective data interface (38) of the control unit (31) is located outside this working space and/or in that the signal cone (45) of the data interface (38) provided on the control unit (31) is aligned in the opposite direction to the load-carrying means (24) and preferably the control unit (31) has a display (36) for indicating at least one operating status and/or a keypad (37) and/or a loading interface (41).

3. Lifting system according to one of the preceding claims, **characterized in that** the signal cone (45) of the data interface (38) of the control unit (31) is aligned horizontally or inclined downwards with respect to a horizontal.

4. Lifting system according to one of the preceding claims, **characterized in that** the data interface (38) for the presence signal is formed by an IR receiver and an IR transmitter and the transmitter/receiver (39) of the control signal is formed differently from the data interface (38).

5. Lifting system according to one of the preceding claims, **characterized in that** the control device (35) communicates with the control unit (31) within the signal cone (45) of the data interface (38) and activates the control unit (31) to control the lifting device (14) when the presence signal and the control signal are received simultaneously from the control device (35).

6. Lifting system according to one of the preceding claims, **characterized in that** the control device (35) is designed as a master and the control units (31) are designed as slaves and preferably a plurality of control devices (35) are provided in the control system (33) and are coupled to one another.

7. Lifting system according to one of the preceding claims, **characterized in that** a control device (35) communicates with a stationary controller (34) in the working space of the at least one lifting system (11), which is preferably designed as a master and/or as a communication interface.

8. A method for controlling a lifting system (11) according to any one of claims 1 to 7, comprising a plurality of lifting devices (14) each having a load receiving means (24) movable up and down,
- in which a control system (33) is used to control the lifting devices (14), which consists of a control device (35) and a plurality of control units (31) arranged separately therefrom and in each case on a lifting device (14),
- wherein the control device (35) and the control units (31) have a transmitter/receiver (39) through which control signals are transmitted wirelessly,
- in which the control device (35) and the control units (31) each have data interfaces (38) through which at least one presence signal is transmitted between the control device (35) and the respective control unit (31), and in that the control device (35) is positioned within a signal cone (45) of the data interface (38) of the control unit (31), **characterized in that** the signal cone (45) of the data interface (38) and a signal direction of the transmitter/receiver (39) for the control signal are aligned in the same way, and
- that one of the control units (31) releases the activation of the lifting devices (14) in a time window when the evaluation signal and the control signal are received from the control device (35).

9. Method according to claim 8, **characterized in that** when the presence signal is received simultaneously by the data interface (38) and the control signal is received by the transmitter/receiver (39) at the control unit (31), activation of the lifting devices (14) is enabled.

10. Method according to one of claims 8 or 9, **characterized in that** the presence signal is different from the control signal and both are output simultaneously.

11. Method according to one of claims 8 to 10, **characterized in that**, after the release of the control unit (31) for activating the lifting devices (14) by the control device (35), further functions of the lifting devices (14) are activated and, preferably, when lifting a vehicle, a load-carrying means (24) of the lifting device (14) is activated by the control device (35) until it is applied to a wheel or wheels or to a chassis of the vehicle, and preferably subsequently the lifting devices (14) of the lifting system (11) for lifting the vehicle are controlled in a synchronized manner by the control units (31).

12. Method according to one of claims 8 to 11, **characterized in that** when the presence signal output by the data interface (38) is received by the control device (35), information is interrogated at the opposite lifting device (14) and/or the lifting devices (14) in the lifting system (11) by the control unit (31), by the control device (35) located opposite and transmitted to this control device (35), and preferably optionally output on a display (36) of the control device (35).

13. Method according to claim 12, **characterized in that** the position of the user relative to the lifting device (14), who operates the control device (35), is detected by the control device (35) and is preferably output on the display of the control device (35).

14. Method according to one of claims 8 to 13, **characterized in in that**, for configuring the lifting system (11), the control device (35) is positioned successively to each control unit (31) of the lifting device (14) to be incorporated into the lifting system (11) within the signal cone (45) of the data interface (38) of the control unit (31) and a teach-in operation is then carried out with the lifting device (14) to be incorporated into the lifting system (11) and, after completion of the last teach-in operation of the lifting device (14) to be incorporated, the configuration of the lifting system (11) is completed by a confirmation signal.

15. Lifting system (11) according to one of claims 1 to 7, wherein each control unit (31) has a mounting interface (29) for attachment to the lifting device (14) and a user interface (32), and wherein the data interface (38) on the control unit (31) has a signal cone (45) which is oriented differently from the mounting interface (29) or the user interface (32).

## Revendications

1. Système de levage, en particulier pour lever et abaisser des véhicules, qui comprend plusieurs dispositifs de levage (14) qui peuvent être commandés par un système de commande (33) du système de levage, le système de commande (33) comprenant un dispositif de commande (35) et plusieurs unités de commande (31), une unité de commande (31) étant prévue sur chaque dispositif de levage (14), qui commande un moyen de réception de charge (24) du dispositif de levage (14), le dispositif de commande (35) étant prévu séparément des unités de commande (31), les unités de commande (31) et le dispositif de commande (35) comprenant chacun un émetteur/récepteur (39) pour transmettre sans fil un signal de commande, une interface de données (38) étant prévue sur chaque unité de commande (31) et sur le dispositif de commande (35) pour la transmission sans fil d'un signal de présence et en ce que l'interface de données (38) sur l'unité de commande (31) présente un cône de signal (45) qui est orienté de manière divergente par rapport au moyen de suspension de charge (24), **caractérisé, en ce que** le cône de signal (45) de l'interface de données (38) et une direction de signal de l'émetteur/récepteur (39) pour le signal de commande sont orientés de la même manière et **en ce que** l'unité de commande (31) est disposée de telle sorte que, lors d'une réception du signal de présence et du signal de commande par le dispositif de commande (35) dans une fenêtre temporelle, la commande du dispositif de levage (14) est libérée.

2. Système de levage selon la revendication 1, **caractérisé en ce que** , **en ce qu'**un espace de travail est formé entre deux dispositifs de levage (14) opposés l'un à l'autre ou plusieurs dispositifs de levage (14) opposés l'un à l'autre par paires, et le cône de signalisation (45) de l'interface de données (38) respective de l'unité de commande (31) est situé à l'extérieur de cet espace de travail et/ou **en ce que** le cône de signalisation (45) de l'interface de données (38) prévue sur l'unité de commande (31) est orienté à l'opposé du moyen de réception de charge (24) et, de préférence, l'unité de commande (31) présente un écran (36) pour l'affichage d'au moins un état de fonctionnement et/ou un clavier (37) et/ou une interface de chargement (41).

3. Système de levage selon l'une des revendications précédentes, **caractérisé en ce que** le cône de signalisation (45) de l'interface de données (38) de l'unité de commande (31) est orienté horizontalement ou est orienté de manière inclinée vers le bas par rapport à une horizontale.

4. Système de levage selon l'une des revendications précédentes, **caractérisé en ce que** l'interface de données (38) pour le signal de présence est formée par un récepteur IR et un émetteur IR et l'émetteur/récepteur (39) du signal de commande est formé différemment de l'interface de données (38).

5. Système de levage selon l'une des revendications précédentes, **caractérisé en ce que** le dispositif de commande (35) communique avec l'unité de commande (31) à l'intérieur du cône de signal (45) de l'interface de données (38) et active l'unité de commande (31) pour commander le dispositif de levage (14) lors d'une réception simultanée du signal de présence et du signal de commande provenant du dispositif de commande (35).

6. Système de levage selon l'une des revendications précédentes, **caractérisé en ce que** le dispositif de commande (35) est conçu comme maître et les unités de commande (31) comme esclaves, et de préférence plusieurs dispositifs de commande (35) sont prévus dans le système de commande (33) et couplés entre eux.

7. Système de levage selon l'une des revendications précédentes, **caractérisé en ce qu'**un dispositif de commande (35) communique avec une commande fixe (34) dans l'espace de travail de l'au moins un système de levage (11), qui est de préférence conçue comme maître et/ou comme interface de communication.

8. Procédé de commande d'un système de levage (11) selon l'une quelconque des revendications 1 à 7, constitué de plusieurs dispositifs de levage (14) comprenant chacun un moyen de réception de charge (24) mobile vers le haut et vers le bas,
- dans lequel on utilise un système de commande (33) pour la commande des dispositifs de levage (14), lequel se compose d'un dispositif de commande (35) et de plusieurs unités de commande (31) disposées séparément de celui-ci et respectivement sur un dispositif de levage (14),
- dans lequel le dispositif de commande (35) et les unités de commande (31) comprennent un émetteur/récepteur (39) par lequel des signaux de commande sont transmis sans fil,
- dans lequel le dispositif de commande (35) et les unités de commande (31) présentent chacun des interfaces de données (38) par lesquelles au moins un signal de présence est transmis entre le dispositif de commande (35) et l'unité de commande (31) respective, et en ce que le dispositif de commande (35) est positionné à l'intérieur d'un cône de signal (45) de l'interface de données (38) de l'unité de commande (31), **caractérisé en ce que** le cône de signal (45) de l'interface de données (38) et une direction de signal de l'émetteur/récepteur (39) pour le signal de commande sont orientés de la même façon, et
- **en ce que** la commande des dispositifs de levage (14) est libérée par l'une des unités de commande (31) lors d'une réception du signal d'évaluation et du signal de commande par le dispositif de commande (35) dans une fenêtre temporelle.

9. Procédé selon la revendication 8, **caractérisé en ce que**, lors d'une réception simultanée du signal de présence par l'interface de données (38) et du signal de commande par l'émetteur/récepteur (39) au niveau de l'unité de commande (31), une commande des dispositifs de levage (14) est libérée.

10. Procédé selon l'une des revendications 8 ou 9, **caractérisé en ce que** le signal de présence est différent du signal de commande et **en ce que** les deux sont émis simultanément.

11. Procédé selon l'une des revendications 8 à 10, **caractérisé en ce qu'**après la libération de l'unité de commande (31) pour la commande des dispositifs de levage (14) par le dispositif de commande (35), d'autres fonctions des dispositifs de levage (14) sont commandées et, de préférence, lors du levage d'un véhicule, un moyen de réception de charge (24) du dispositif de levage (14) est commandé par le dispositif de commande (35) jusqu'à ce qu'il s'applique contre une ou des roues ou contre un châssis du véhicule, et, de préférence, les dispositifs de levage (14) du système de levage (11) sont ensuite commandés de manière synchronisée par les unités de commande (31) pour soulever le véhicule.

12. Procédé selon l'une des revendications 8 à 11, **caractérisé en ce que**, lors d'une réception par le dispositif de commande (35) du signal de présence émis par l'interface de données (38), des informations sont interrogées sur le dispositif de levage (14) opposé et/ou les dispositifs de levage (14) dans le système de levage (11) par l'unité de commande (31), par le dispositif de commande (35) opposé et sont transmises à ce dispositif de commande (35), et sont de préférence émises sélectivement sur un écran (36) du dispositif de commande (35).

13. Procédé selon la revendication 12, **caractérisé en ce que** la position de l'utilisateur par rapport au dispositif de levage (14), qui utilise le dispositif de commande (35), est reconnue par le dispositif de commande (35) et est de préférence sortie sur l'écran du dispositif de commande (35).

14. Procédé selon l'une des revendications 8 à 13, **caractérisé en ce que** , **en ce que**, pour configurer le système de levage (11), le dispositif de commande (35) est positionné successivement par rapport à chaque unité de commande (31) du dispositif de levage (14) à intégrer dans le système de levage (11), à l'intérieur du cône de signal (45) de l'interface de données (38) de l'unité de commande (31), et ensuite, un processus d'apprentissage est effectué avec le dispositif de levage (14) à intégrer dans le système de levage (11) et, à la fin du dernier processus d'apprentissage du dispositif de levage (14) à intégrer, la configuration du système de levage (11) est terminée par un signal de confirmation.

15. Système de levage (11) selon l'une des revendications 1 à 7, dans lequel chaque unité de commande (31) présente une interface de montage (29) pour la fixation sur le dispositif de levage (14) et une surface de commande (32), et dans lequel l'interface de données (38) sur l'unité de commande (31) présente un cône de signalisation (45) qui est orienté différemment de l'interface de montage (29) ou de la surface de commande (32).
